# EUROPEAN PATENT APPLICATION

(11) **EP 4 636 582 A1**
(43) Date of publication of application: **22.10.2025**
(21) Application number: 25170648.7
(22) Date of filing: 15.04.2025
(51) Int. Cl.: G06F 8/65, G06F 9/4401

(54) **IMAGE PROCESSING APPARATUS AND FIRMWARE UPDATING**

(30) Priority: 19.04.2024 JP 2024068697
(71) Applicant: KYOCERA Document Solutions Inc., Osaka-shi, Osaka 540-8585 (JP)
(72) Inventor: GONDO, Masayuki, Osaka-shi, Osaka, 540-8585 (JP); FUCHIMOTO, Nobuyuki, Osaka-shi, Osaka, 540-8585 (JP); SONE, Masaki, Osaka-shi, Osaka, 540-8585 (JP); HARADA, Takashi, Osaka-shi, Osaka, 540-8585 (JP); SHIBATA, Yukihiro, Osaka-shi, Osaka, 540-8585 (JP); RI, Ho, Osaka-shi, Osaka, 540-8585 (JP); KUZE, Izumi, Osaka-shi, Osaka, 540-8585 (JP)
(74) Representative: Herrero & Asociados, S.L.

(57) **Abstract**

An image processing apparatus (1) includes a storage device (112), a controller (111), an external storage device connecting device (17), and an input receiving device (12). The controller (111) holds connection information indicating that the external storage device (3) has been attached in a case where a detection signal is received from the external storage device connecting device (17) during activation of an application, and performs processing of overwriting updating firmware in a region where firmware is stored in the storage device (112) when a firmware updating execution instruction is input to the input receiving device (12) in a case where the connection information is held and the external storage device (3) stores the updating firmware when the activation of the application is completed.

## Description

### BACKGROUND

The present invention relates to an image processing apparatus and a firmware updating method.

An image processing apparatus such as a multifunction apparatus that has functions of a scanner, printing, copying, a facsimile, and the like stores firmware that controls hardware for realizing each of the functions in a read only memory (ROM). The firmware stored in the ROM is updated to the latest firmware as needed.

As a first general technology, an image processing apparatus, a method, and a program that conveniently realize updating of firmware including a communication processing program to realize communication with an external terminal are known. As a second general technology, an information processing apparatus, an information processing method, and a program that maintain security by invalidating writing control when software is updated in a state where a verification function at the time of execution is valid, performing restarting after the updating of the software ends, and performing verification at the time of activation are known.

### SUMMARY

As an aspect of the present invention, a technology achieved by further improving the above technologies will be proposed.

An image processing apparatus according to an aspect of the present invention includes a storage device, a controller, an external storage device connecting device, and an input receiving device. The storage device stores a predefined application in accordance with a function and firmware to control operations of the image processing apparatus. The controller includes a processor and controls the operations of the image processing apparatus in accordance with the firmware and the application by the processor executing a control program. The external storage device connecting device transmits a detection signal to the controller by the external storage device being attached and exchanges data with the external storage device. An instruction from a user is input to the input receiving device. The controller executes a boot process in response to a power source of the image processing apparatus being turned on, starts activation of an application once the boot process is completed, and performs updating processing of overwriting updating firmware in a region where the firmware is stored in the storage device in a case where the detection signal is received from the external storage device connecting device and the external storage device stores the updating firmware during the activation of the application or when the activation of the application is completed, and when an execution instruction to execute the updating of the firmware is input to the input receiving device.

A firmware updating method according to another aspect of the present invention includes: causing a storage device to store a predefined application in accordance with a function and firmware to control operations of an image processing apparatus; executing a boot process in response to a power source of the image processing apparatus being turned on; starting activation of the application; receiving an input of an execution instruction to execute updating of the firmware via an input receiving device in a case where a detection signal is received from an external storage device connecting device and an external storage device stores updating firmware during activation of the application or when the activation of the application is completed; and updating the firmware using the updating firmware in response to the input of the execution instruction.

### BRIEF DESCRIPTION OF THE DRAWINGS

FIG. 1 is a diagram illustrating an electrical configuration of an image processing apparatus.
FIGS. 2 and 3 are flowcharts illustrating an example of a flow of processing of the image processing apparatus after a power source is turned on.
FIGS. 4 and 5 are diagrams illustrating display examples of a display device.
FIGS. 6 and 7 are flowcharts illustrating another example of the flow of the processing of the image processing apparatus after the power source is turned on.

### DETAILED DESCRIPTION

Hereinafter, an image processing apparatus according to an embodiment of the present invention will be described with reference to the drawings. The image processing apparatus according to the present embodiment is an image forming apparatus such as a printer or a copy machine, a multifunction apparatus that has a plurality of functions such as a facsimile function and a scanner function, or the like.

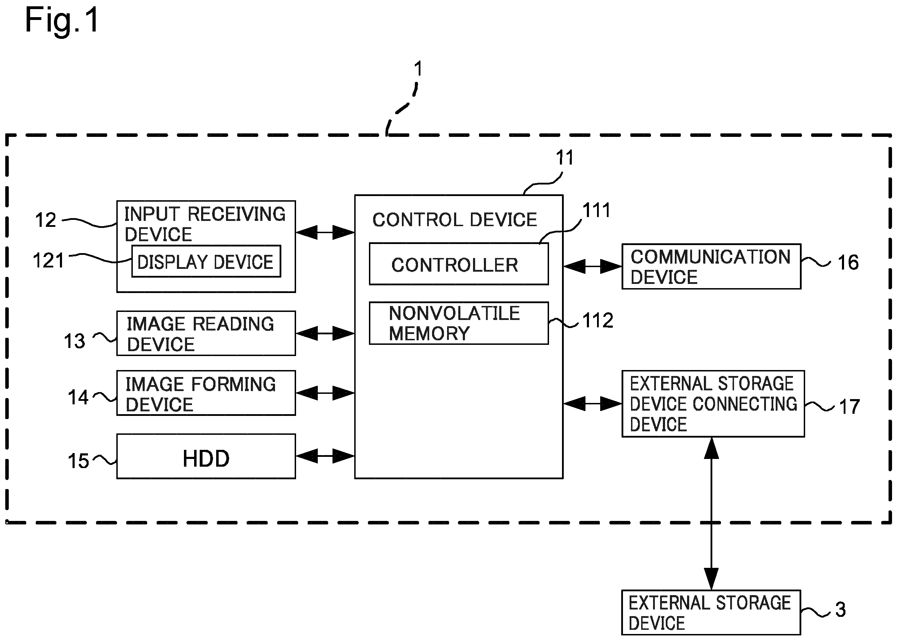

FIG. 1 is a diagram illustrating an electrical configuration of an image processing apparatus 1 according to an embodiment of the present invention. The image processing apparatus 1 includes a control device 11, an input receiving device 12, an image reading device 13, an image forming device 14, a hard disk drive (HDD) 15, a communication device 16, an external storage device connecting device 17, and the like.

The input receiving device 12 includes a hard key such as an enter key or a start key to perform various operations or a setting fixing operation and a display device 121. The display device 121 includes, for example, an LCD. The display device 121 displays an operation screen, a message, or the like. The display device 121 may include a touch panel.

The image reading device 13 includes a scanner or the like. The image reading device 13 reads an image on an original document and generates image data. The image forming device 14 prints, on a sheet, an image indicated by the image data generated by the image reading device 13 or image data that the communication device 16 has received from an external device or the like.

The storage device 15 is configured of, for example, an HDD. The storage device 15 is a large-capacity storage device that stores image data, various programs, data tables, or the like. The storage device 15 may be configured of a solid state drive (SSD) or the like as well as the HDD.

The communication device 16 is configured of a communication module or the like. The communication device 16 transmits and receives various kinds of data to and from an external device such as a server via a network.

The external storage device connecting device 17 includes an insertion port (an interface of a slot or a USB port) to which the external storage device 3 is connected. The external storage device connecting device 17 transmits a detection signal to a controller 111, which will be described later, if the external storage device 3 is attached.

The external storage device 3 is a storage capable of saving large-capacity data. The external storage device 3 is, for example, a secure digital (SD) card or a USB memory. The external storage device 3 is used by being attached to the external storage device connecting device 17. The controller 111 causes the HDD 15 or the external storage device 3 to store various kinds of data.

The control device 11 is configured of a processor, a random access memory (RAM), a ROM, and the like. The processor is a central processing unit (CPU), a micro processing unit (MPU), an application specific integrated circuit (ASIC), or the like. The control device 11 functions as the controller 111 by the processor executing a control program stored in the ROM or the like. The controller 111 is in charge of overall operation control of the image processing apparatus 1.

The control device 11 includes a nonvolatile memory 112 (storage device). The nonvolatile memory 112 stores firmware that controls operations of the image processing apparatus 1 and an application that realizes various functions.

The firmware stored in the nonvolatile memory 112 may be updated for reasons such as extension of the functions, enhancement of the functions, and the like. The image processing apparatus 1 performs updating processing of the firmware in a case where attachment of the external storage device 3 is detected during a boot process executed in response to a power source of the image processing apparatus 1 being turned on.

In a case of a general image processing apparatus that is not the one according to the present embodiment, there is a problem that the update processing is not performed when attachment of an external storage device is not detected during a boot process for some reasons, such as a delay of the detection of the attachment of the external storage device.

Thus, the image processing apparatus 1 according to the present embodiment executes processing for moving on to the updating processing of the firmware at an appropriate timing even in a case where the external storage device connecting device 17 detects the external storage device 3 after the boot process of the image processing apparatus 1 is executed. The processing will be described below in detail.

### <First embodiment>

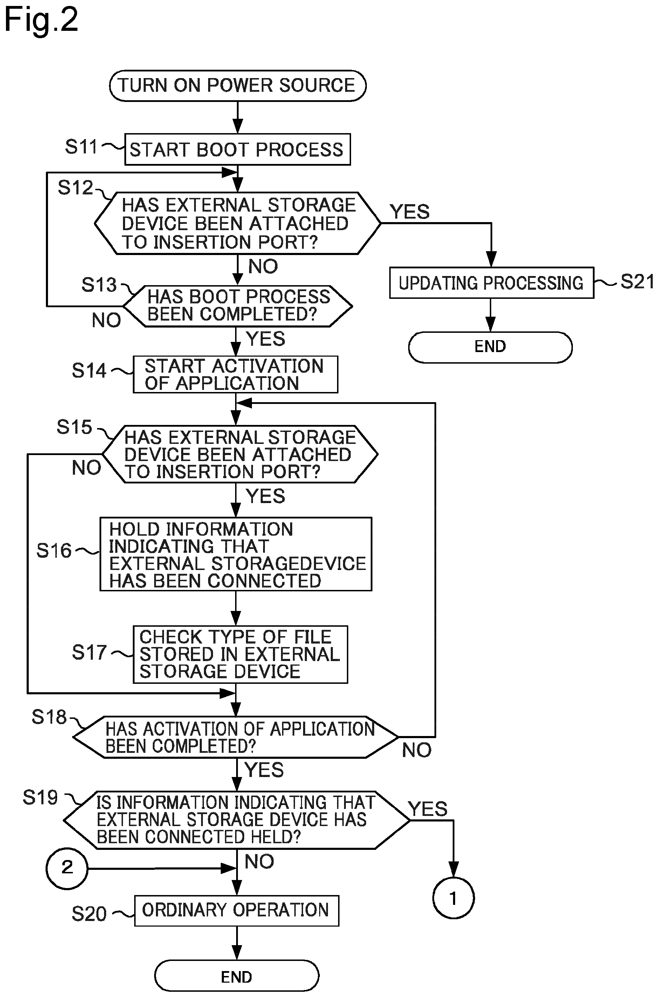

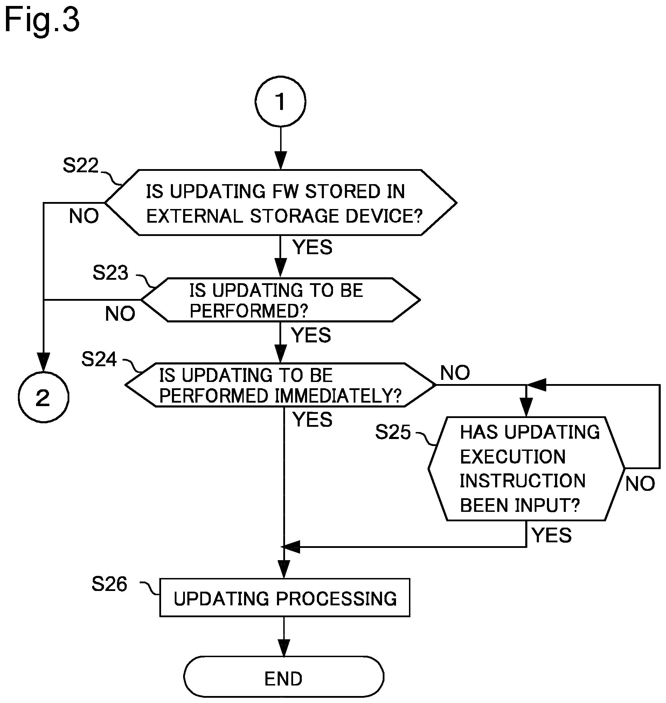

In a first embodiment, operations in a case where the external storage device connecting device 17 detects attachment of the external storage device 3 during activation of an application executed after the boot process of the image processing apparatus 1 will be described. FIGS. 2 and 3 are flowchart illustrating a flow of processing of the image processing apparatus 1 after the power source is turned on according to the first embodiment.

Once the power source of the image processing apparatus 1 is turned on, the controller 111 starts execution of the boot process (Step S11). If the external storage device 3 is attached to the external storage device connecting device 17 and the controller 111 receives a detection signal from the external storage device connecting device 17 during the execution of the boot process (Step S12; YES), the controller 111 moves on to updating processing (Step S21).

The updating processing is processing of overwriting firmware that has already been installed in the image processing apparatus 1 using the firmware that is stored in the external storage device 3.

In the updating processing, the controller 111 causes a mode of the image processing apparatus 1 to shift from a normal mode (a mode in which processing of starting the image processing apparatus 1 is performed) to an updating mode (a mode in which the firmware updating processing is executed) and then restart the image processing apparatus 1. The controller 111 updates the firmware by reading the updating firmware from the external storage device 3 after the restarting and overwriting the updating firmware in a region where the corresponding firmware is stored in the nonvolatile memory 112.

In a case where the controller 111 does not receive a detection signal from the external storage device connecting device 17 during the execution of the boot process (Step S12; NO, Step S13; YES), that is, in a case where the external storage device 3 is not attached to the external storage device connecting device 17, the controller 111 starts activation of a predefined application (Step S14).

In a case where the external storage device 3 is attached to the external storage device connecting device 17 and the controller 111 receives a detection signal from the external storage device connecting device 17 during application of the application (Step S15; YES), the controller 111 holds connection information indicating that the external storage device 3 has been attached to the external storage device connecting device 17 (Step S16) and checks the type of a file stored in the external storage device 3 (Step S17).

Note that the controller 111 does not perform the processing of executing the application or opening the file stored in the external storage device 3 during the activation of the application.

When the activation of the application is completed (Step S18; YES) or in a case where the connection information is not held (Step S19; NO), the controller 111 causes the image processing apparatus 1 to perform an ordinary operation, that is, an operation of executing each function based on the activated application in accordance with an instruction from a user (Step S20).

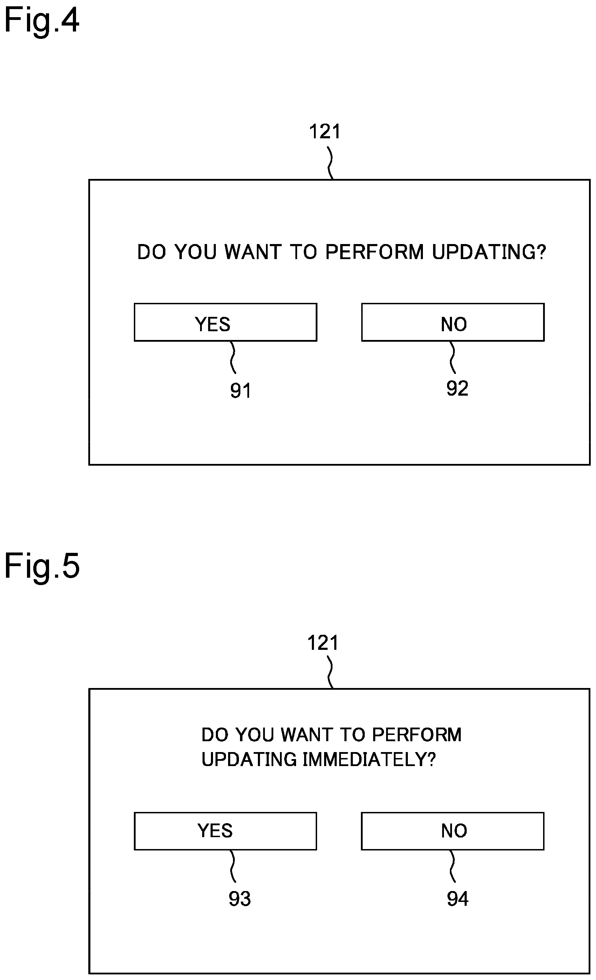

On the other hand, in a case where the connection information is held (Step S19; YES), and it is determined that the updating firmware is stored in the external storage device 3 (Step S22; YES), the controller 111 causes the display device 121 to display a first selection screen to promote an input of an instruction regarding whether or not to perform updating. FIG. 4 is a diagram illustrating a display example of the display device 121 when the first selection screen is displayed.

When an updating instruction is input to the input receiving device 12 by the user performing an operation on a button 91 to allow the updating (Step S23; YES), the controller 111 causes the display device 121 to display a second selection screen to promote an input of an instruction regarding whether or not to immediately perform updating. FIG. 5 is a diagram illustrating a display example of the display device 121 when the second selection screen is displayed.

When an updating execution instruction is input to the input receiving device 12 by the user performing the operation on a button 93 to allow updating to be immediately performed (Step S24; YES), the controller 111 performs the updating processing (Step S26).

When an updating non-execution instruction is input to the input receiving device 12 by the user performing an operation on a button 94 indicating that updating is not to be performed immediately (Step S25; NO), the controller 111 does not perform the updating processing until the input receiving device 12 receives an input to provide an updating execution instruction (Step S25; YES).

On the other hand, when the external storage device 3 does not store the updating firmware (Step S22; NO), or when an instruction to refuse updating is input to the input receiving device 12 by the user performing an operation on a button 92 indicating that the updating is not to be performed (Step S23; NO), the controller 111 does not perform the updating processing and causes the image processing apparatus 1 to perform the ordinary operation (Step S20).

Here, in a case where updating firmware suitable for the image processing apparatus 1 is not stored, such as a case where the external storage device 3 stores updating firmware of a past version or a case where the external storage device 3 stores updating firmware for an image processing apparatus of another model (Step S22; NO), the controller 111 may cause the display device 121 to display an error message indicating that the updating firmware is not suitable.

Note that in a case where the updating is not to be performed due to the instruction from the user regardless of the external storage device 3 storing the updating firmware (Step S23; NO), the controller 111 causes the image processing apparatus 1 to perform the ordinary operation and causes the display device 121 to display a list of files stored in the external storage device 3.

In a case where it is determined that the external storage device 3 stores a predefined binary file or a predefined program that is not to be used by general users (that is, used only by service persons of the image processing apparatus 1), the controller 111 does not cause the display device 121 to display information indicating the file or the program.

In this case, when it is determined that the external storage device 3 stores the file or the program other than the predefined binary file or the predetermined program, the controller 111 causes the display device 121 to display information indicating the file or the program other than the predetermined binary file or the predetermined program.

Incidentally, a general image processing apparatus detects attachment of the external storage device during a boot process executed by turning on the power source of the image processing apparatus and performs the updating processing if the attachment is detected in a case where the updating firmware is read from an external storage device such as a universal serial bus (USB) memory and updating of the firmware is performed as described above.

However, there is a problem that the updating processing is not performed in a case where the attachment of the external storage device is not detected during the boot process for a reason such as a delay of the detection of the attachment of the external storage device. The aforementioned general first technology and second technology do not take a method to solve the problem into consideration.

On the other hand, according to the aforementioned embodiment, the controller 111 performs the updating processing at an appropriate timing even in a case where the external storage device 3 storing the updating firmware is attached to the external storage device connecting device 17 at a timing after the boot process of the image processing apparatus 1. It is thus possible to reliably cause the updating processing to proceed irrespective of the timing at which the attachment of the external storage device storing the updating firmware is recognized.

### <Second embodiment>

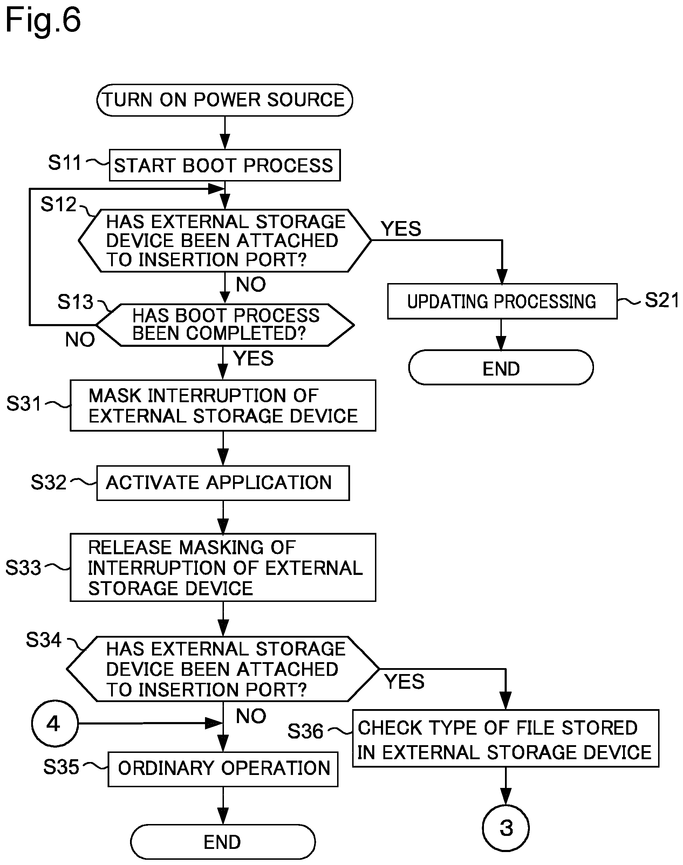

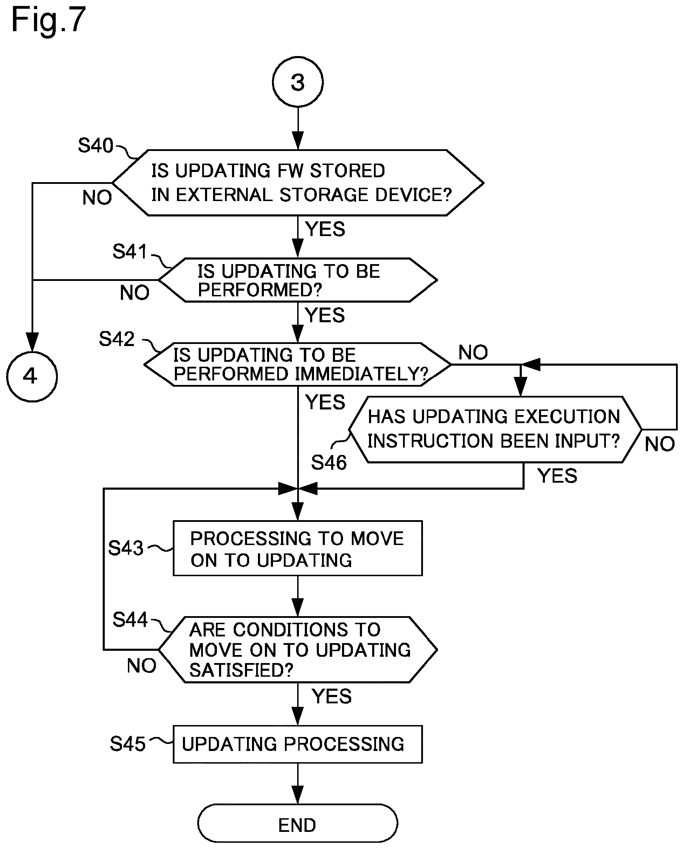

In a second embodiment, operations in a case where an external storage device connecting device 17 detects attachment of an external storage device 3 after activation of an application that is activated after a boot process of an image processing apparatus 1 will be described. FIGS. 6 and 7 are flowcharts illustrating a flow of processing after a power source of the image processing apparatus 1 is turned on according to the second embodiment. Content of processing in Step S11 to Step S13 and processing in Step S21 is the same as the content described in the first embodiment, and description will thus be omitted.

Once the boot process is completed (Step S13; YES), the controller 111 performs processing to mask an interruption request from the external storage device 3 occurring by the external storage device 3 being attached to the external storage device connecting device 17 (processing not to receive an interruption request) (Step S31).

The controller 111 activates a predefined application in this state (Step S32). In other words, the controller 111 does not perform processing related to the external storage device 3 even if the external storage device 3 is attached to the external storage device connecting device 17 during activation of the application.

If the activation of the application is completed, the controller 111 releases the masking of the interruption request from the external storage device 3 (Step S33). When a detection signal from the external storage device connecting device 17 is not received (Step S34; NO), the controller 111 causes the image processing apparatus 1 to perform an ordinary operation (Step S35).

On the other hand, when a detection signal is received from the external storage device connecting device 17 (Step S34; YES), the controller 111 checks the type of a file stored in the external storage device 3 (Step S36). In a case where it is determined that the external storage device 3 stores updating firmware (Step S40; YES), the controller 111 causes a display device 121 to display a first selection screen to promote an input of an instruction regarding whether or not to perform updating (FIG. 4).

When an updating instruction is input to an input receiving device 12 by a user performing an operation on a button 91 indicating that the updating is allowed (Step S41; YES), the controller 111 causes the display device 121 to display a second selection screen to promote an input of an instruction regarding whether or not to immediately perform updating (FIG. 5).

When an updating execution instruction is input to the input receiving device 12 by the user performing an operation on a button 93 to allow updating to be immediately performed (Step S42; YES), the controller 111 performs predefined processing to move on to the updating (Step S43).

The predefined processing to move on to the updating is (i) stopping reception of a job such as printing transmitted from an external device to the image processing apparatus 1 or (ii) processing of causing execution or stopping of a job that has already been received to be completed. In the case of (ii), the controller 111 may determine to execute or stop the job in accordance with the type of the job. In the case of (ii), the controller 111 may cause the display device 121 to display a list of jobs and may execute or stop a job in accordance with a job execution instruction or stopping instruction input to the input receiving device 12 by a user's operation.

When an updating non-execution instruction is input to the input receiving device 12 by the user performing an operation on a button 94 indicating that updating is not to be performed immediately (Step S42; NO), the controller 111 does not perform the updating processing until the input receiving device 12 receives the updating execution instruction (Step S46; NO).

When the input receiving device 12 receives an input of the updating execution instruction by the user performing an operation on a button 93 indicating that the updating is to be performed immediately (Step S46; YES), the controller 111 performs processing to move on to the updating (Step S43).

The controller 111 determines whether or not conditions to move on to the updating have been satisfied after the processing to move on to the updating (Step S44). When it is determined that the conditions to move on to the updating are satisfied by the job having not been executed or by the execution of the job having been completed (Step S44; YES), the controller 111 performs the updating processing (Step S45).

On the other hand, when the external storage device 3 does not store the updating firmware (Step S40; NO) or when an instruction to refuse updating is input to the input receiving device 12 by the user performing an operation on a button 92 indicating that the updating is not to be performed (Step S41; NO), the controller 111 does not perform the updating processing and causes the image processing apparatus 1 to perform an ordinary operation (Step S35).

Here, in a case where the external storage device 3 does not store updating firmware suitable for the image processing apparatus 1 such as a case where updating firmware of a past version is stored or a case where updating firmware for an image processing apparatus of another model is stored (Step S40; NO), the controller 111 may cause the display device 121 to display an error message indicating that the updating firmware is not appropriate.

In this manner, according to the second embodiment, the controller 111 performs updating processing at an appropriate timing even in a case where the external storage device 3 storing the updating firmware is attached to the external storage device connecting device 17 at a timing after activation of the application after the boot process of the image processing apparatus 1. It is thus possible to reliably cause the updating processing to advance irrespective of a timing at which the attachment of the external storage device storing the updating firmware is recognized.

The configurations and the processing in the aforementioned embodiments described using FIGS. 1 to 7 are just examples of the present invention, and the present invention is not intended to be limited to the configurations and the processing.

## Claims

1. An image processing apparatus (1) comprising:
a storage device (112) that stores a predefined application in accordance with a function and firmware to control operations of the image processing apparatus (1);
a controller (111) that includes a processor and controls the operations of the image processing apparatus (1) in accordance with the firmware and the application by the processor executing a control program;
an external storage device connecting device (17) that transmits a detection signal to the controller (111) once the external storage device (3) is attached, and exchanges data with the external storage device (3); and
an input receiving device (12) to which an instruction from a user is input,
wherein the controller (111)
executes a boot process in response to a power source of the image processing apparatus (1) being turned on,
starts activation of the application once the boot process is completed, and
performs updating processing of overwriting updating firmware in a region where the firmware is stored in the storage device (112) in a case where the detection signal is received from the external storage device connecting device (17) and the external storage device (3) stores the updating firmware during the activation of the application or when the activation of the application is completed and when an execution instruction to execute the updating of the firmware is input to the input receiving device (12).

2. The image processing apparatus (1) according to claim 1,
wherein the controller (111)
holds connection information indicating that the external storage device (3) has been attached in a case where the detection signal is received from the external storage device connecting device (17) during the activation of the application, and
in a case where the connection information is held and the external storage device (3) stores the updating firmware when the activation of the application is completed, and once the execution instruction is input to the input receiving device (12), performs the updating processing.

3. The image processing apparatus (1) according to claim 1,
wherein the controller (111)
masks an interruption request from the external storage device (3) by the external storage device (3) being attached and activates the application once the boot process is completed,
releases the masking of the interruption request once the activation of the application is completed, and
in a case where the detection signal is received from the external storage device connecting device (17) and the external storage device (3) stores the updating firmware when the activation of the application is completed, and when the execution instruction is input to the input receiving device (12), performs updating processing.

4. The image processing apparatus (1) according to claim 3,
wherein if a job stopping instruction to stop a job and execute the updating or a job execution instruction to complete the job and execute the updating is further input to the input receiving device (12) in a case where the execution instruction is input to the input receiving device (12) during execution of the job or during holding of the job, the controller (111) performs execution processing or stopping processing of the job in accordance with content of the job stopping instruction or the job execution instruction and performs the updating processing.

5. The image processing apparatus (1) according to any of claims 1 to 4, further comprising:
a display device (121),
wherein in a case where the external storage device (3) does not store the updating firmware, the controller (111) causes the display device (121) to display an error message.

6. A firmware updating method comprising:
causing a storage device (112) to store a predefined application in accordance with a function and firmware to control operations of an image processing apparatus (1);
executing a boot process in response to a power source of the image processing apparatus (1) being turned on;
starting activation of the application;
receiving an input of an execution instruction to execute updating of the firmware via an input receiving device (12) in a case where a detection signal is received from an external storage device connecting device (17) and an external storage device (3) stores updating firmware during activation of the application or when the activation of the application is completed; and
updating the firmware using the updating firmware in response to the input of the execution instruction.

7. The firmware updating method according to claim 6, further comprising:
holding connection information indicating that the external storage device (3) has been attached in a case where the detection signal is received from the external storage device connecting device (17) during the activation of the application,
wherein in the receiving of the instruction, the input of the execution instruction is received via the input receiving device (12) in a case where the connection information is held and the external storage device (3) stores the updating firmware when the activation of the application is completed.

8. The firmware updating method according to claim 6, further comprising:
masking an interruption request from the external storage device (3) by the external storage device (3) being attached once the boot process is completed; and
releasing the masking of the interruption request once the activation of the application is completed,
wherein in the receiving of the instruction, the input of the execution instruction is received via the input receiving device (12) in a case where the detection signal is received from the external storage device connecting device (17) and the external storage device (3) stores the updating firmware when the activation of the application is completed.
